# EUROPEAN PATENT SPECIFICATION

(11) **EP 2 143 760 B1**
(45) Date of publication and mention of the grant of the patent: **09.03.2011**
(21) Application number: 08160165.0
(22) Date of filing: 11.07.2008
(51) Int. Cl.: C08L 23/14, C08L 23/16, C08L 23/08, C08J 5/18

(54) **Heterophasic polymer composition providing high sealing strength**
Heterophasenpolymer-Zusammensetzung mit hoher Dichtheitsstärke
Composition de polymère hétérophasique fournissant une grande force d'étanchéité

(43) Date of publication of application: 13.01.2010
(73) Proprietor: Borealis AG, 1220 Vienna (AT)
(72) Inventor: Grein, Christelle, 4020 Linz (AT); Gloger, Dietrich, 4020 Linz (AT); Schedenig, Tonja, 4470 Enns (AT)
(74) Representative: Haggenmüller, Christian

(56) References cited:
- EP-A- 1 193 053
- EP-A- 1 354 901
- US-A- 4 256 784
- US-A- 4 634 745
- US-A1- 2005 080 192
- US-A1- 2008 085 977
- US-B1- 6 342 564

## Description

The present invention relates to a heterophasic polymer composition which is useful for the preparation of sterilizable containers such as retort pouches or medical packaging.

There is an increasing trend in the food packaging industry to use plastic containers, notably pouches containing sterilized or pre-cooked foods. Retort pouches offer many advantages over rigid metal packages such as faster cooking/sterilizing time, less shelf storage space, easier disposal, improved food taste. Typical pouches have a multilayer structure with polyolefins such as polyethylene or polypropylene, adhesives, barrier and external layers. It is desired that the polyolefin material imparts stiffness as well as high impact strength to the final packaging material. In addition, the polymers should comply with legal requirements about safety standards, e.g. FDA regulations in terms of the amount of hexane solubles.

The same trend, i.e. increased use of polyolefinic materials, is seen in the medical packaging industry as well. Again, the polymer should impart sufficient stiffness as well as high impact strength to the final packaging material.

It is known that impact strength of polypropylene can be improved by dispersing a rubber phase within the polymer matrix, thereby obtaining a heterophasic polypropylene composition. Such a material is also called "impact-modified polypropylene".

As discussed above, it is known that heterophasic impact-modified propylene polymers provide high impact strength which is why the amount of rubber dispersed within the matrix should be sufficiently high, e.g. in stand-up pouches typically at least 10 wt% or even at least 15 wt%.

For some food packaging applications such as retort pouches or some medical packaging applications, a sterilization treatment is needed. The most common sterilization procedures are the use of heat (steam), radiation (beta radiation, electrons, or gamma radiation) or chemicals (usually ethylene oxide). Steam sterilisation is usually carried out in a temperature range of about 120 to 130°C. Of course, treatment of a polymer under the sterilization conditions outlined above can affect its final properties.

For packaging applications, it is very important that the seal strength performance of the polymeric material, in particular in the area of a welding joint where two polymer films are fixed together, is still on a high level after being subjected to a sterilization step at high temperature. If sterilization has a detrimental effect on seam strength of a welding joint fixing two polymer films within the packaging material, the welding joint could easily open under stress. This failure mode is also called "peel effect" and should be suppressed as much as possible.

However, it has turned out that seal strength performance of a heterophasic polypropylene having a high amount of rubber, e.g. at least 10 wt% or even more than 15 wt%, is significantly impaired during a sterilization step. In other words, in known impact-modified polypropylenes, improvement of impact strength by increasing the amount of rubber is achieved on the expense of seal strength (or peeling resistance). The weakness of the known impact-modified polypropylene materials with respect to their seal strength performance after a sterilization step at higher rubber loadings limits their use to small containers or pouches, typically less than 500 g, i.e. to applications where requirements on impact strength are not the highest. Such a limitation is related to the increased promotion of peel with increasing amounts of the dispersed rubber phase.

US 6 342 564, EP 1 354 901, US 2005/080192, US 2008/085977, US 4 634 745, EP 1 193 058, US 4 256 784 relates to a range of propylene polymer compositions (also heterophasic) comprising propylene terpolymers.

DE 103 61 851 A1 and DE 203 20 212 U1 disclose a heat-sterilizable multi-layer film laminate comprising the following layers, each modified with an impact modifier : (1) an outer layer of a polypropylene homopolymer; (2) an intermediate layer of a polypropylene terpolymer; and (3) an inner layer of a polypropylene terpolymer or copolymer. The impact-modifier, i.e. the dispersed rubber phase, can be selected from styrene-ethylene-butylene block copolymers, styrene-ethylene-propylene block copolymers, polyethylene copolymers, or polyethylene plastomers.

EP 1 193 053 A1 discloses a thermoplastic, multi-layer, heat-shrinkable film having a sealing layer comprising a blend of a propylene copolymer or terpolymer with from about 5 to about 40 % by weight of an EPDM elastomer. The film can be used for the preparation of a heat-treatable container such as a bag or a pouch.

WO 99/02604 relates to the use of heterophase olefin copolymers consisting of a) random copolymers of propylene with one or several other alpha-olefins from the group of C2 and C4 to C10 olefins and with an 80 to 99.5 mol%. proportion of propylene; and b) ethylene propylene rubber (EPR) containing 30 to 70 wt% propylene, with a solution viscosity of 0.7 to 5.3 dl/g, for producing moulded parts with improved resistance to ionising radiation.

EP 0 738 589 relates to a multilayer film, comprising a) a first layer comprising a blend of homopolymer or copolymer of polypropylene and elastomer; and b) a second layer in adherence with the first layer, the second layer comprising an ethylene/alpha-olefin copolymer having a density of less than or equal to 0.89 g/cm³. The elastomer may be selected from styrene-ethylene-butylene-styrene block copolymer, styrene-butadiene-styrene block copolymer, styrene-isoprene-styrene block copolymer, ethylene-propylene rubber, and ethylene-propylene-diene terpolymer. The film can be used for the preparation of a pouch which is suitable for the packaging and administration of medical solutions

Considering the drawbacks outlined above, it is an object of the present invention to provide a polypropylene composition which still has high seal strength after being subjected to a sterilization treatment, while simultaneously maintaining impact strength on a high level. Furthermore, the final composition should still have sufficient stiffness and comply with legal requirements, e.g. FDA regulations in terms of hexane solubles.

According to the present invention, the object is solved by providing a heterophasic polymer composition according to claim 1.

The propylene copolymer consituting the matrix comprises comonomer units derived from ethylene as well as comonomer units derived from a C4 to C12 alpha-olefin such as 1-butene, 1-hexene or 1-octene. Thus, the propylene copolymer comprises at least two different comonomer units (i.e. is at least a terpolymer) but could also comprise three or more different types of comonomers within the polypropylene chain.

In the present invention, the term "matrix" is to be interpreted in its commonly accepted meaning, i.e. it refers to a continuous phase (in the present invention a continuous polymer phase) in which isolated or discrete particles such as rubber particles may be dispersed. The term "propylene copolymer matrix" refers to a matrix wherein the propylene copolymer as defined in further detail below is present in such an amount so as to form a continuous phase which can act as a matrix. However, the term "propylene copolymer matrix" does not exclude that other polymeric matrix components are present as well.

The matrix phase can be made of the propylene copolymer only but can also comprise additional polymers, in particular polymers which can be blended homogeneously with the propylene copolymer and together form a continuous phase which can act as a matrix. At least 80 wt% of the matrix, more preferably at least 90 wt%, even more preferably at least 95 wt% of the matrix are made of the propylene copolymer. Even further preferred, the matrix consists of the propylene copolymer.

In a preferred embodiment, the propylene copolymer which constitutes the matrix is a terpolymer.

Preferably, the propylene copolymer of the matrix has an amount of ethylene-derived comonomer units of 2.5 wt% or less, more preferably 2.0 wt% or less, even more preferably 1.5 wt% or less. With respect to a lower limit, it is preferred that the propylene copolymer of the matrix has an amount of ethylene-derived comonomer units of at least 0.2 wt%, more preferably at least 0.3 wt%, even more preferably at least 0.4wt%.

Preferably, the propylene copolymer of the matrix has an amount of C4 to C 12 alpha-olefin-derived comonomer units of 9.0 wt% or less, more preferably 8.0 wt% or less, even more preferably 7.0 wt% or less. With respect to a lower limit, it is preferred that the propylene copolymer of the matrix has an amount of C4 to C 12 alpha-olefin derived comonomer units of at least 0.5 wt%, more preferably at least 1.0 wt%, even more preferably at least 1.5 wt%.

In a preferred embodiment, the propylene copolymer of the matrix has an amount of ethylene-derived comonomer units within the range of 0.2 wt% to 2.5 wt%, more preferably 0.3 wt% to 2.0 wt%, even more preferably 0.4 wt% to 1.5 wt%, and an amount of C4 to C12 alpha-olefin-derived monomer units within the range of 0.5 wt% to 9.0 wt%, more preferably 1.0 wt% to 8.0 wt%, even more preferably 1.5 wt% to 7.0 wt%.

Preferably, the C4 to C12 alpha-olefin to be incorporated as a comonomer into the propylene copolymer of the matrix is selected from 1-butene, 1-hexene, 1-octene, or any mixture thereof. In a preferred embodiment, the C4 to C12 alpha-olefin of the propylene copolymer is 1-butene.

Preferably, the propylene copolymer of the matrix is selected from a propylene/ethylene/1-butene terpolymer, a propylene/ethylene/1-hexene terpolymer, a propylene/ethylene/1-octene terpolymer, or any mixture thereof. Even more preferably, the propylene copolymer of the matrix is a propylene/ethylene/1-butene terpolymer.

Preferably, the propylene copolymer of the matrix has an MFR(2.16 kg, 230°C) within the range of 0.5 g/10 min to 10 g/10 min, more preferably 0.5 g/10 min to 2.5 g/10 min, even more preferably 0.6 g/10 min to 2.3 g/10 min, and even further preferably 0.7 g/10 min to 2.1 g/10 min.

As indicated above, the propylene copolymer matrix may optionally comprise further polymer(s) which can be blended homogeneously with the propylene copolymer. Preferably, the matrix, either consisting of the propylene copolymer or optionally comprising one or more additional polymers, has an MFR(2.16 kg, 230°C) within the range of 0.5 g/10 min to 10 g/10 min, more preferably 0.5 g/10 min to 2.5 g/10 min, even more preferably 0.6 g/10 min to 2.3 g/10 min, and even further preferably 0.7 g/10 min to 2.1 g/10 min.

Preferably, the propylene copolymer of the matrix has a xylene cold soluble fraction of less than 5 wt%, more preferably less than 4 wt%, even more preferably less than 3.5 wt%. In a first approximation, it can be assumed that the xylene cold soluble fraction corresponds to the amorphous part of the propylene copolymer.

As indicated above, the propylene copolymer matrix may optionally comprise further polymer(s) which can be blended homogeneously with the propylene copolymer. Preferably, the matrix, either consisting of the propylene copolymer or optionally comprising one or more additional polymers, has a xylene cold soluble fraction of less than wt%, more preferably less than 4 wt%, even more preferably 3.5 wt%. In a first approximation, it can be assumed that the xylene cold soluble fraction corresponds to the amorphous part of the propylene copolymer matrix.

Preferably, the propylene copolymer of the matrix has a melting temperature of at least 131 °C, more preferably at least 133°C, even more preferably at least 135°C.

Preferably, the propylene copolymer matrix has a melting temperature of at least 131°C more preferably at least 133°C, even more preferably at least 135 °C.

Preferably, the propylene copolymer constituting the matrix is made with a Ziegler-Natta catalyst or a metallocene catalyst.

In a preferred embodiment, the polypropylene constituting the matrix has a rather broad molecular weight distribution (MWD), more preferably the polypropylene is multimodal, even more preferred bimodal. "Multimodal" or "multimodal distribution" describes a frequency distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in a sequential step process, i.e. by utilizing reactors coupled in serial configuration, and using different conditions in each reactor, the different polymer fractions produced in the different reactors each have their own molecular weight distribution which may considerably differ from one another. The molecular weight distribution curve of the resulting final polymer can be seen as super-imposing of molecular weight distribution curves of the individual polymer fractions which will, accordingly, show distinct maxima, or at least be distinctively broadened compared with the curves for individual fractions.

A polymer showing such molecular weight distribution curve is called bimodal or multimodal, respectively.

The polypropylene constituting the matrix can be multimodal, e.g. bimodal. If so, the polypropylene constituting the matrix may have a molecular weight distribution (MWD) of 5 to 60, more preferably in the range of 8 to 25.

Alternatively, it may be preferred that the propylene copolymer constituting the matrix is monomodal. If used, it preferably has an MWD of 3 to 8, more preferably 4 to 7.

The propylene copolymer constituting the matrix may be produced by a single - or multistage process polymerisation of propylene with ethylene and a C4 to C12 alpha-olefin such as bulk polymerisation, gas phase polymerisation, solution polymerisation or combinations thereof using conventional catalysts. The propylene copolymer, preferably the propylene terpolymer, can be made either in loop reactors or in a combination of loop and gas phase reactor. Those processes are well known to one skilled in the art.

A suitable catalyst for the polymerisation of the propylene polymer is any stereospecific catalyst for propylene polymerisation which is capable of copolymerising propylene and comonomers at a temperature of 40 to 110 °C and at a pressure from 10 to 100 bar. Ziegler- Natta catalysts (especially a high yield Ziegler-Natta system containing Ti, Cl, Mg and Al) as well as metallocene catalysts are suitable catalysts.

As indicated above, the heterophasic polymer composition of the present invention comprises an elastomeric ethylene/propylene/C4 to C12 alpha-olefin copolymer which is dispersed within the propylene copolymer matrix.

As used in the present invention, the term "elastomeric" corresponds to the commonly accepted meaning and refers to a rubber-like polymeric material of more or less amorphous nature.

The elastomeric copolymer is dispersed within the propylene copolymer matrix, i.e. it does not form a continuous phase but is rather present as separated areas distributed throughout the polypropylene constituting the matrix.

Preferably, the amount of propylene-derived monomer units in the elastomeric copolymer is at least 60 wt%, more preferably at least 65 wt%, even more preferably at least 70 wt%. With respect to the upper limit, it is preferred that the amount of propylene-derived monomer units in the elastomeric copolymer is 95 wt% or less, more preferably 90 wt% or less.

Preferably, the amount of C4 to C12 alpha-olefin-derived monomer units in the elastomeric copolymer is at least 0.5 wt%, more preferably at least 0.75 wt%, even more preferably at least 1.0wt%. With respect to the upper limit, it is preferred that the amount of C4 to C12 alpha-olefin-derived monomer units in the elastomeric copolymer is 9.0 wt% or less, more preferably 8.5 wt% or less.

In a preferred embodiment, the elastomeric copolymer has an amount of propylene-derived comonomer units within the range of 60 wt% to 95 wt%, more preferably 65 wt% to 90 wt%, even more preferably 70 wt% to 85 wt%, and an amount of C4 to C12 alpha-olefin-derived monomer units within the range of 0.5 wt% to 9.0 wt%, more preferably 1.0 wt% to 8.5 wt%.

Preferably, the C4 to C12 alpha-olefin to be incorporated as a comonomer into the elastomeric copolymer is selected from 1-butene, 1-hexene, 1-octene, or any mixture thereof. In a preferred embodiment, the C4 to C12 alpha-olefin of the elastomeric copolymer is 1-butene.

Preferably, the elastomeric copolymer is a terpolymer which means that the elastomeric copolymer consists of ethylene-derived monomer units, propylene-derived monomer units, and monomer units derived from a C4 to C12 alpha-olefin, i.e. in total three different kinds of monomer units. More preferably, the elastomeric copolymer is an elastomeric ethylene/propylene/1-butene terpolymer.

Preferably, the elastomeric copolymer is present in an amount of from 10 wt% to 40 wt%, more preferably 12.5 wt% to 30 wt%, even more preferably 14 wt% to 27.5 wt%, based on the weight of the heterophasic polymer composition.

Within the present invention, the elastomeric copolymer as defined above may be the only rubber phase which is dispersed within the propylene copolymer matrix. However, it is also possible, that additional elastomeric polymers are dispersed in the matrix. If so, it is preferred that the elastomeric copolymer as defined above represents at least 60 wt%, more preferably at least 70 wt%, even more preferably at least 80 wt% of the total amount of elastomeric polymers.

Preferably, the elastomeric copolymer represents at least 70 wt%, more preferably at least 75 wt%, even more preferably at least 80 wt%, and even further preferably at least 90 wt% of the xylene cold soluble fraction of the heterophasic polymer composition. In a first approximation, the xylene cold soluble fraction of the heterophasic polymer composition encompasses the amorphous parts of the propylene copolymer matrix and the total amount of rubber dispersed within the matrix. However, as the xylene cold soluble fraction of the matrix is quite low, the amount of elastomeric copolymer in the xylene cold soluble fraction of the overall composition roughly corresponds to its fraction in the overall rubber content.

Preferably, the C4 to C12 alpha-olefin of the propylene copolymer of the matrix corresponds to the C4 to C12 alpha-olefin of the elastomeric copolymer. As an example, if the propylene copolymer of the matrix includes 1-butene-derived comonomer units, it is preferred that the elastomeric copolymer dispersed in the matrix also includes 1-butene-derived comonomer units.

Preferably, the propylene copolymer of the matrix is a propylene/ethylene/1-butene terpolymer and the elastomeric copolymer being dispersed in the propylene copolymer matrix is an elastomeric ethylene/propylene/1-butene terpolymer.

The amount of the C4 to C12 alpha-olefin-derived monomer units (such as 1-butene-derived monomer units) within the propylene copolymer of the matrix and the amount of the C4 to C12 alpha-olefin-derived monomer units (such as 1-butene-derived monomer units) within the xylene cold soluble fraction differ by less than 3.0 wt%, even more preferably by less than 2.5 wt%, and even further preferably by less than 2.0 wt%.

Preferably, the amount of the C4 to C12 alpha-olefin-derived monomer units within the propylene copolymer of the matrix and the amount of the C4 to C12 alpha-olefin-derived monomer units within the elastomeric copolymer differ by less than 3.0 wt%, more preferably by less than 2.5 wt%, even more preferably by less than 2.0 wt%.

As indicated above, the heterophasic polymer composition of the present invention has a xylene cold soluble fraction of at least 10 wt%, and the xylene cold soluble fraction has an amount of propylene-derived monomer units of at least 60 wt%. The xylene cold soluble fraction comprises the amorphous parts of the propylene copolymer matrix and the total amount of rubber dispersed within the matrix. However, as the xylene cold soluble fraction originating from the matrix is quite low, the xylene cold soluble fraction of the overall composition indicates, as a first approximation, the total amount of rubber. Furthermore, as a first approximation, the content of the propylene-derived monomer units in the xylene cold soluble fraction corresponds to the propylene content of the rubber phase. Xylene cold soluble fraction (XCS) is easy to measure and frequently used as a parameter indicating the amount of elastomeric components within heterophasic, impact-modified compositions.

Preferably, the heterophasic polymer composition has a xylene cold soluble fraction of at least 12.5 wt%, even more preferably at least 14 wt%. With respect to the upper limit, it is preferred that the heterophasic polymer composition has a xylene cold soluble fraction of 50 wt% or less, more preferably 45 wt% or less, even more preferably 40 wt% or less, and even further preferably 30 wt% or less.

The amount of propylene-derived monomer units in the xylene cold soluble fraction is at least 60 wt%, more preferably at least 65 wt%, even more preferably at least 70 wt%. With respect to the upper limit, it is preferred that the amount of propylene-derived monomer units in the xylene cold soluble fraction is 95 wt% or less, more preferably 90 wt% or less, even more preferably 85 wt% or less.

Preferably, the amount of C4 to C 12 alpha-olefin-derived monomer units in the xylene cold soluble fraction is at least 0.5 wt%, more preferably at least 0.75 wt%, even more preferably at least 1.0 wt%. With respect to the upper limit, it is preferred that the amount of C4 to C12 alpha-olefin-derived monomer units in the xylene cold soluble fraction is 9.0 wt% or less, more preferably 8.5 wt% or less.

In a preferred embodiment, the xylene cold soluble fraction has an amount of propylene-derived comonomer units within the range of 60 wt% to 95 wt%, more preferably 65 wt% to 90 wt%, even more preferably 70 wt% to 85 wt%, and an amount of C4 to C12 alpha-olefin-derived monomer units within the range of 0.5 wt% to 9.0 wt%, more preferably 1.0 wt% to 8.5 wt%.

Preferably, the heterophasic polymer composition has an MFR(2.16 kg, 230°C) within the range of 0.05 g/10 min to 20 g/10 min, more preferably 0.1 g/10 min to 10 g/10 min.

Preferably, the xylene cold soluble fraction of the heterophasic polymer composition has an intrinsic viscosity of at least 1.5 dl/g, more preferably at least 2.0 dl/g, even more preferably at least 2.4 dl/g.

The elastomeric ethylene/propylene/C4-C12 alpha-olefin may be produced by known polymerisation processes such as solution, suspension and gas-phase polymerisation using conventional catalysts. Ziegler-Natta catalysts as well as metallocene catalysts are suitable catalysts.

A widely used process is the solution polymerisation. Ethylene, propylene, a C4-C12 alpha-olefin such as 1-butene and catalyst systems are polymerised in an excess of hydrocarbon solvent. Stabilisers and oils, if used, are added directly after polymerisation. The solvent and unreacted monomers are then flashed off with hot water or steam, or with mechanical devolatilisation. The polymer, which is in crumb form, is dried with dewatering in screens, mechanical presses or drying ovens. The crumb is formed into wrapped bales or extruded into pellets.

The suspension polymerisation process is a modification of bulk polymerisation. The monomers and catalyst system are injected into the reactor filled with propylene. The polymerisation takes place immediately, forming crumbs of polymer that are not soluble in the propylene. By flashing off the propylene and comonomers, the polymerisation process is completed.

The gas-phase polymerisation technology uses one or more vertical fluidised beds. Monomers and nitrogen in gas form along with catalyst are fed to the reactor and solid product is removed periodically. Heat of reaction is removed through the use of the circulating gas that also serves to fluidise the polymer bed. Solvents are not used, thereby eliminating the need for solvent stripping, washing and drying.

Further information about the production of elastomeric copolymers is also provided in e.g. US 3,300,459, US 5,919,877, EP 0 060 090 A1 and in a company publication by EniChem "DUTRAL, Ethylene-Propylene Elastomers", pages 1-4 (1991).

Alternatively, elastomeric copolymers, which are commercially available and which fulfil the indicated requirements, can be used.

If the elastomeric copolymer such as an ethylene/propylene/1-butene rubber, is prepared separately from the polypropylene constituting the matrix, it can be subsequently blended with the matrix polymer by any conventional blending means, e.g. melt blending in an extruder.

Alternatively, the ethylene/propylene/C4-C12 rubber can be prepared as a reactor blend together with the propylene copolymer constituting the matrix, e.g. starting with the production of the matrix polymer in a loop reactor and transferring the product into a gas phase reactor, where the elastomeric copolymer is polymerised.

Preferably, the heterophasic polymer composition is prepared by reactor blending in a multistep process comprising at least one loop reactor and at least one gas phase reactor.

Preferably, a dispersion of the elastomeric phase within the matrix polymer is produced by performing a second polymerization stage in the presence of particles of matrix polymer, e.g. as a second polymerization stage of a multistage polymerization. Preferably the combination of the matrix and elastomer copolymer is produced in a two stage polymerization using two or more polymerization reactors, more preferably using bulk and gas phase reactors (especially fluidized bed gas phase reactors), especially preferably using a loop reactor followed by two gas phase reactors or by a loop and a gas phase reactor. In such a procedure, the catalyst system used may be varied between stages but is preferably the same for all stages. Especially preferably, a prepolymerized heterogeneous catalyst is used.

While the catalyst may be a metallocene, it is preferred to use Ziegler Natta catalysts, e.g. an inorganic halide (e.g. MgCl₂) supported titanium catalyst, together with an aluminium alkyl (e.g. triethylaluminium) cocatalyst. Silanes, e.g. dicyclopentanedimethoxysilane (DCPDMS) or cyclohexylmethyldimethoxysilane (CHMDMS), may be used as external donors. Such catalyst systems are described in EP 0 491 566 A1.

According to a further aspect, the present invention provides a film, more preferably a multilayer film, comprising the heterophasic polymer composition as defined above.

According to a further aspect, the present invention provides a container, comprising the film, preferably the multilayer film, as defined above and/or the heterophasic polymer composition as defined above.

As will be demonstrated below in further detail, the heterophasic polymer composition of the present invention still provides high seal strength after having been subjected to a sterilisation treatment such as steam sterilisation, e.g. at a temperature of about 115°C to 130°C.

In principle, the seal strength can be measured by tearing the welding seam of two PP films, which are joined by welding, with defined speed until the seam breaks. One or more of the following properties can be measured to obtain data for the assessment of seal strength:
(1) The seam strength, expressed in MPa. The seam strength is the highest stress that is achieved in the stress-elongation curve that is the result of the tensile test.
(2) The elongation at break, expressed in %. The elongation at break is the length of the sample at the moment of breakage relative to the original length of the sample.
(3) The work at break (Wbreak): Wbreak is the result of the integration of the stress-elongation curve in the interval between 0 and the elongation at break.
(4) The number of samples that showed a peel effect instead of film breakage.

Preferably, the container has been subjected to a sterilisation treatment such as steam sterilisation, e.g. at a temperature of about 120°C to 130°C. A sterilised container comprising the heterophasic polymer composition of the present invention and/or a film made thereof still has high seal strength.

Preferably, the container is a pouch, more preferably a stand-up pouch.

According to a further aspect, the present invention provides a process for the production of the heterophasic polymer composition as defined above, comprising the following steps:
- preparing the propylene copolymer constituting the matrix,
- preparing the elastomeric copolymer and dispersing the elastomeric copolymer in the propylene copolymer matrix.

With respect to the preparation of the propylene copolymer constituting the matrix, reference can be made to the statements provided above.

With respect to the preparation of the elastomeric copolymer, reference can be made to the statements provided above.

Preferably, the elastomeric copolymer is prepared in the presence of the polypropylene copolymer constituting the matrix and is *in situ* dispersed in the matrix, which is also called reactor blending.

Preferably, the propylene copolymer is prepared in at least one loop reactor and optionally at least gas phase reactor. Preferably, the at least one loop reactor and at least one gas phase reactor are in serial configuration.

Preferably, the elastomeric copolymer is prepared in at least one gas phase reactor.

According to a further aspect, the present invention provides the use of the heterophasic polymer composition as defined above for the preparation of sterilisable or sterilised films and/or containers.

The present invention also provides the use of the heterophasic polymer composition as defined above for improving seal strength in sterilised multi-layered products and/or containers.

The present invention will now be illustrated in further detail by the following examples.

### Examples

### Measuring methods

### 1. Mw, Mn, MWD

Mw, Mn, and MWD are measured by Gel Permeation Chromatography (GPC) according to the following method:
The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 µL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

### 2. Melt Flow Rate (MFR)

The melt flow rates were measured with a load of 2.16 kg (MFR₂) at 230 °C for polypropylene and at 190 °C for polyethylene. The melt flow rate is that quantity of polymer in grams which the test apparatus standardised to ISO 1133 extrudes within 10 minutes at a temperature of 230 °C or 190 °C respectively, under a load of 2.16 kg.

### 3. Comonomer content

Comonomer content (wt%) can be determined in a known manner based on Fourier transform infrared spectroscopy (FTIR) determination calibrated with ¹³C-NMR.

### 4. Xylene cold soluble fraction (XCS, wt%)

The xylene cold soluble fraction (XCS) was determined at 23°C according to ISO 6427.

### 5. Intrinsic viscosity

The intrinsic viscosity (IV) was determined according to ISO 1628-1 at 135°C with decaline as solvent.

### 6. Dynatest, measured at 23°C

The Dynatest measures the toughness and extensibility of the material. The value "Wbreak" [J/mm] represents the total energy per mm thickness that a film can absorb before it breaks. The higher this value, the tougher the material is.

### 7. Seam strength measurements

The scam strength is measured by tearing the seam with defined speed until it breaks. The measurement procedure is as follows:

Two identical PP films are welded together by applying a defined temperature and a defined pressure for a defined time. In the present case this welding was done at two different temperatures (180°C and 220°C) with a force of 300 N for 0,5 seconds. The strength of said welding joint is then measured by a Tensile Test following ISO 527: at a temperature of 23°C, the welding joint is fixed with clamps. The clamps start to move away from each other and by doing this apply stress to the film / welding joint. The movement of the clamps is going on until one of the following events:
(a) the film breaks next to the welding joint (desired failure mode in this case) or
(b) the welding joint opens (called "peel effect", this failure mode is not desired for the materials described in the present invention)

During this measurement the following parameters are continuously measured:
(1) the force that the film resists as a function of the actual elongation of the film. This is recorded continuously, at any time of the measurement one gets the actual elongation and the stress the film opposed this elongation.
   The parameter "εbreak" (=elongation at break) represents the length of the film related to the original length at the moment the film or welding joint breaks. It is given in % with the original length of the specimen before the measurement being 100%.
   The parameter "Wbreak" (= work at break) represents the total energy that the film /welding joint has consumed until the moment the film / welding joint breaks.
(2) Every measurement is done on 10 welding joints. After the measurements the broken specimens are evaluated for the failure mode (a) or (b). In the examples values are also given for "peel": this means how many out of 10 specimens showed the undesired failure mode (b): This value is desired to be as low as possible, ideally 0.

### 8. Melting temperature

Melting temperature Tm was measured with Mettler TA820 differential scanning calorimetry (DSC) on 5 to 10 mg, typically 8±-0.5 mg samples. Melting curves were obtained during 10°C/min heating scans between 30°C and 225°C. Melting temperature was taken as the peak.

### 9. Amount of n-hexane solubles

The amount of n-hexane solubles was measured according to the method FDA CFR 21 § 177: 1520. Procedure: 1 g sample of a polymer film of 100 µm thickness (produced on a PM30 cast film extruder using a chill-roll temperature of 40°C) was extracted at 50 °C in 400 ml n-hexane for 2 hours and then filtered on a filter paper No. 41. The filtrate was then evaporated and the total residue weighed as a measure of the n-hexane extractable fraction.

### Preparation of the test samples

The heterophasic polypropylene compositions for the inventive examples E1 to E3 and the comparative examples CE 1 to CE4 were produced in a multi-stage reactor arrangement. The polypropylene matrix is prepared first in a loop reactor by using a ZN-catalyst.

The polypropylene constituting the matrix is then transferred to a gas phase reactor where polymerisation of the elastomeric copolymer is carried out (i.e. so-called reactor-blending). The catalyst that is used for the production of the elastomeric phase is the same that is used for the production of the matrix.

Comparative Example CE5 was prepared by mechanical blending.

With the reactor blending process described above, three inventive samples (E1 to E3) were prepared. The matrix was made of a propylene random copolymer having ethylene- and 1-butene derived comonomer units. The elastomeric copolymer dispersed within the matrix was an elastomeric ethylene/propylene/1-butene rubber having a high content of propylene-derived monomer units. Further details about E1-E3 are provided below.

In Comparative Examples CE 1-3 prepared by the reactor blending process described above, the matrix was made of a propylene random copolymer having ethylene- and 1-butene derived comonomer units. The elastomeric copolymer dispersed within the matrix was an elastomeric ethylene/propylene/1-butene rubber having a content of propylene-derived monomer units outside the claimed range. Further details about Comparative Examples 1-3 are provided below.

In Comparative Example CE 4 prepared by the reactor blending process described above, the matrix was made of a propylene homopolymer. The elastomeric copolymer dispersed within the matrix was an elastomeric ethylene/propylene rubber having a high content of propylene-derived monomer units. Further details about Comparative Example 4 are provided below.

In Comparative Example CE 5 prepared by mechanically blending as described above, the matrix was made of a blend of a propylene homopolymer with a propylene copolymer having ethylene- and 1-butene-derived monomer units (i.e. a terpolymer). The elastomeric phase dispersed within the matrix was a propylene/ethylene rubber having a high content (more than 70 wt%) of propylene-derived monomer units. Further details about Comparative Example 5 are provided below.

From each of the polymer compositions according to E1-E3 and CE1-CE5, two cast films were prepared on a film extruder with a melt temperature of 290-300°C, a melt pressure of 120-130 bar and a chill roll temperature of 15°C, which were joined by welding as described above under the headline "Seam strength measurements". Subsequently, seam toughness, seam strength, and seam work consumption at break were measured before and after sterilisation. The results are provided below.

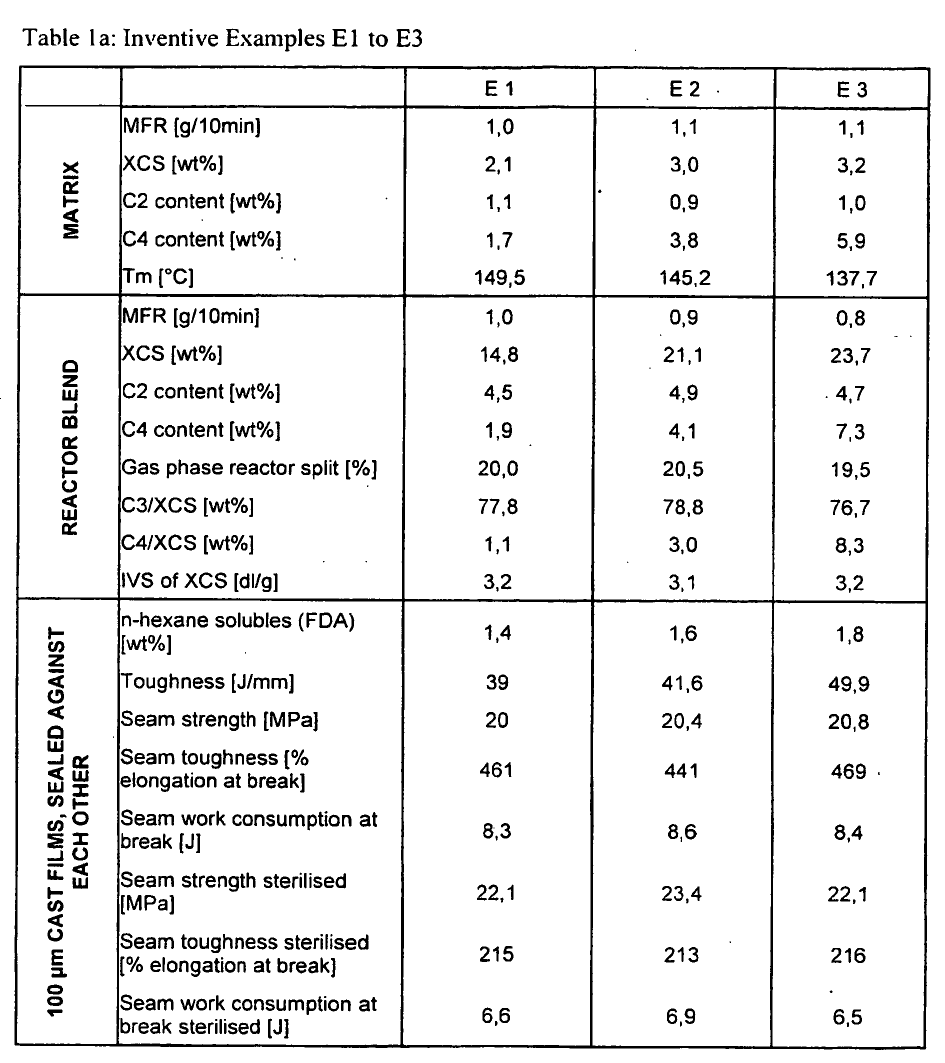

"Matrix" refers to measurements that have been performed on the pure matrix fraction, i.e. what has been produced in the loop reactor. "Reactor blend" refers to the final composition, i.e. comprising the matrix and the elastomeric phase dispersed therein.

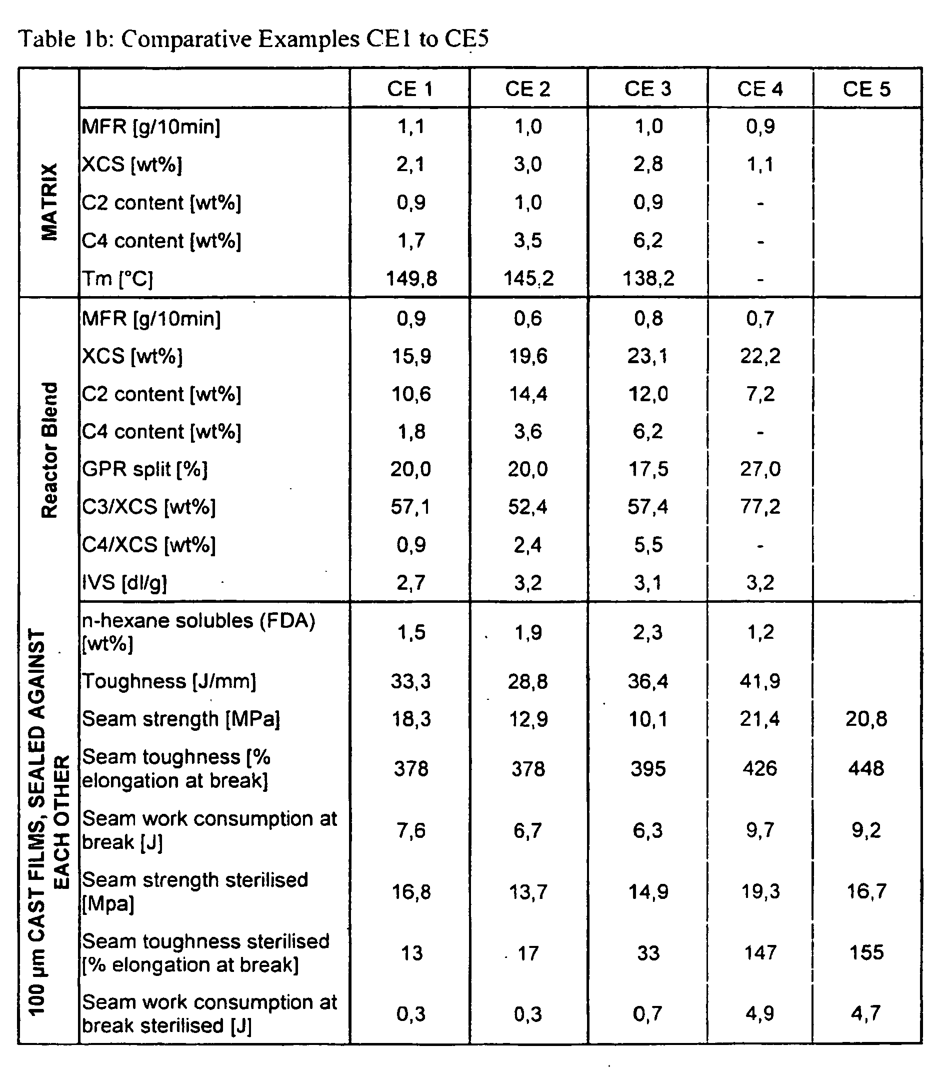

In CE1-CE3, the propylene copolymer matrix as well as the elastomeric rubber were terpolymers. However, the elastomeric copolymer dispersed within the matrix had a content of propylene-derived monomer units of less than 60 wt%. As a consequence, seal strength after sterilisation is significantly lower if compared to the inventive embodiments.

In CE 4, the elastomeric copolymer has an amount of propylene-derived monomer units of more than 60 wt%, as can be seen from the amount of propylene-derived monomer units in the xylene cold soluble fraction (C3/XCS). However, neither the matrix polymer nor the dispersed elastomeric phase is a terpolymer. Again, seal strength after sterilisation is significantly lower if compared to the inventive embodiments.

In CE 5, the matrix comprises a polypropylene terpolymer and the dispersed elastomeric copolymer has an amount of propylene-derived monomer units of more than 60 wt%. However, the elastomeric copolymer is a propylene/ethylene rubber but not a terpolymer. Again, seal strength after sterilisation is significantly lower if compared to the inventive embodiments.

## Claims

1. A heterophasic polymer composition, comprising
- a propylene copolymer matrix, wherein the propylene copolymer comprises comonomer units derived from ethylene and from a C4 to C12 alpha-olefin, and at least 80 wt% of the matrix are made of the propylene copolymer;
- an elastomeric ethylene/propylene/C4 to C12 alpha-olefin copolymer which is dispersed within the matrix,
the heterophasic polymer composition having a xylene cold soluble fraction measured at 23°C according to ISO 6427, of at least 10 wt% up to 50 wt%, and the xylene cold soluble fraction having an amount of propylene-derived monomer units of at least 60 wt%, and wherein the amount of the C4 to C12 alpha-olefin-derived monomer units in the propylene copolymer of the matrix and the amount of the C4 to C12 alpha-olefin-derived monomer units within the xylene cold soluble fraction differ by less than 3.0 wt%.

2. The heterophasic polymer composition according to claim 1, wherein the propylene copolymer of the matrix has an amount of ethylene-derived comonomer units within the range of 0.2 wt% to 2.5 wt% and an amount of C4 to C12 alpha-olefin-derived comonomer units within the range of 0.5 wt% to 9.0 wt%.

3. The heterophasic polymer composition according to claim or 2, wherein the C4 to C12 alpha-olefin of the propylene copolymer of the matrix is 1-butene, 1-hexene, 1-octene, or any mixture thereof.

4. The heterophasic polymer composition according to claim 3, wherein the propylene copolymer of the matrix is a propylene/ethylene/1-butene terpolymer.

5. The heterophasic polymer composition according to one of the preceding claims, wherein the propylene copolymer matrix has an MFR (2.16 kg, 230°C) within the range of 0.5 g/10 min to 2.5 g/10 min.

6. The heterophasic polymer composition according to one of the preceding claims, wherein the C4 to C12 alpha-olefin of the elastomeric copolymer is 1-butene, 1-hexene, 1-octene, or any mixture thereof.

7. The heterophasic polymer composition according to claim 6, wherein the elastomeric copolymer is an elastomeric ethylene/propylene/l-butene terpolymer.

8. The heterophasic polymer composition according to one of the preceding claims,
wherein the elastomeric copolymer is present in an amount of from 10 wt% to 30 wt%, based on the weight of the heterophasic polymer composition.

9. The heterophasic polymer composition according to one of the preceding claims,
wherein the elastomeric copolymer represents at least 70 wt%, more preferably at least 80 wt%, even more preferably at least 90 wt% of the xylene cold soluble fraction of the heterophasic polymer composition.

10. The heterophasic polymer composition according to one of the preceding claims, having a xylene cold soluble fraction within the range of 12.5wt% to 50 wt%.

11. The heterophasic polymer composition according to one of the preceding claims, wherein the xylene cold soluble fraction has an amount of propylene-derived monomer units within the range of 65 wt% to 90 wt%.

12. The heterophasic polymer composition according to one of the preceding claims, wherein the xylene cold soluble fraction has an intrinsic viscosity of at least 1.5 dl/g, determined according to ISO1628-1 at 135°C in decaline.

13. A film, comprising the heterophasic polymer composition as defined in one of the claims 1 to 12.

14. A container, comprising the film as defined in claim 13 and/or the heterophasic polymer composition as defined in one of the claims 1 to 12.

15. A process for the production of the heterophasic polymer composition according to one of the claims I to 12, comprising the following steps:
- preparing the propylene copolymer constituting the matrix,
- preparing the elastomeric copolymer and dispersing the elastomeric copolymer in the propylene copolymer matrix.

16. The process according to claim 15, wherein the elastomeric copolymer is prepared in the presence of the polypropylene copolymer constituting the matrix and is in situ dispersed in the matrix.

17. Use of the heterophasic polymer composition according to one of the claims 1 to 12 for the preparation of sterilisable or sterilised films and/or containers.

## Patentansprüche

1. Eine heterophasische Polymerzusammensetzung umfassend
- eine Propylen-Copolymermatrix, worin das Propylen-Copolymer Comonomereinheiten umfasst, die von Ethylen und von C4 bis C 12 alpha-Olefinen stammen, und mindestens 80 Gew.-% der Matrix aus dem Propylen-Copolymer hergestellt ist,
- ein elastomeres Ethylen/Propylen/C4 bis C12 alpha-Olefin Copolymer, welches in der Matrix dispergiert ist,
die heterophasische Polymerzusammensetzung einen bei 23°C nach ISO 6427 gemessene Xylol kaltlösliche Fraktion von mindestens 10 Gew.-% bis zu 50 Gew.-% hat und die Xylol kaltlösliche Fraktion eine Menge von Propylen stammenden Monomereinheiten von mindestens 60 Gew.-% hat, und worin die Menge an den C4 bis C12 alpha-Olefin stammenden Monomereinheiten in dem Propylen-Copolymer der Matrix und die Menge der C4 bis C12 alpha-Olefin stammenden Monomereinheiten innerhalb der Xylol kaltlöslichen Fraktion mit weniger als 3 Gew.-% divergieren.

2. Die heterophasische Polymerzusammensetzung nach Anspruch 1, worin das Propylen-Copolymer der Matrix eine Menge an Ethylen stammenden Conomereinheiten im Bereich von 0,2 Gew.-% bis 2,5 Gew.-% hat und die Menge an C4 bis C12 alpha-Olefin stammenden Comonomereinheiten im Bereich von 0,5 Gew.-% bis 9,0 Gew.-% liegt.

3. Die heterophasische Polymerzusammensetzung nach Anspruch 1 oder 2, worin das C4 bis C12 alpha-Olefin des Propylen-Copolymers der Matrix 1-Buten, 1-Hexen, 1-Okten oder jegliche Mischung davon ist.

4. Die heterophasische Polymerzusammensetzung nach Anspruch 3, worin das Propylen-Copolymer der Matrix ein Propylen/Ethylen/1-Buten Terpolymer ist.

5. Die heterophasische Polymerzusammensetzung nach irgendeinem der vorhergehenden Ansprüche, worin die Propylen-Copolymermatrix ein MFR (2,16 kg, 230°C) im Bereich von 0,5 g/10 min bis 2,5 g/10 min hat.

6. Die heterophasische Polymerzusammensetzung nach irgendeinem der vorhergehenden Ansprüchen, worin das C4 bis C 12 alpha-Olefin des elastomeren Copolymers 1-Buten, 1-Hexen, 1-Okten oder jegliche Mischung davon ist.

7. Die heterophasische Polymerzusammensetzung nach Anspruch 6, worin das elastomere Copolymer ein elastomeres Ethylen/Propylen/1-Buten Terpolymer ist.

8. Die heterophasische Polymerzusammensetzung nach irgendeinem der vorhergehenden Ansprüche, worin das elastomere Copolymer in einer Menge von 10 Gew.-% bis 30 Gew.-% basierend auf dem Gewicht der heterophasischen Polymerzusammensetzung vorliegt.

9. Die heterophasische Polymerzusammensetzung nach irgendeinem der vorhergehenden Ansprüche, worin das elastomere Copolymer mindestens 70 Gew.-%, bevorzugter mindestens 80 Gew.-%, noch mehr bevorzugter mindestens 90 Gew.-% der Xylol kaltlöslichen Fraktion der heterophasischen Polymerzusammensetzung darstellt.

10. Die heterophasische Polymerzusammensetzung nach irgendeinem der vorhergehenden Ansprüche, worin die Zusammensetzung eine Xylol kaltlösliche Fraktion im Bereich von 12,5 Gew.-% bis 50 Gew.-% hat.

11. Die heterophasische Polymerzusammensetzung nach irgendeinem der vorhergehenden Ansprüche, worin die Xylol kaltlösliche Fraktion eine Menge an Propylen stammenden Monomereinheiten im Bereich von 65 Gew.-% bis 90 Gew.-% hat.

12. Die heterophasische Polymerzusammensetzung nach irgendeinem der vorhergehenden Ansprüche, worin die Xylol kaltlösliche Fraktion eine nach ISO 1628-1 bei 135°C in Decalin gemessene intrinsische Viskosität von mindestens 1,5 dl/g hat.

13. Ein Film umfassend die heterophasische Polymerzusammensetzung, wie in einem der Ansprüche 1 bis 12 definiert.

14. Ein Container umfassend den Film wie in Anspruch 13 und/oder die heterophasische Polymerzusammensetzung, wie in einem der Ansprüche 1 bis 12 definiert.

15. Ein Verfahren für die Herstellung der heterophasischen Polymerzusammensetzung nach irgendeinem der Ansprüche 1 bis 12 umfassend folgende Schritte:
- Herstellung der Propylen-Copolymer bildenden Matrix,
- Herstellung des elastomeren Copolymers und Dispergierung des elastomeren Copolymers in der Propylen-Copolymermatrix.

16. Verfahren nach Anspruch 15, worin das elastomere Copolymer in Gegenwart der Propylen-Copolymer bildenden Matrix hergestellt ist und in situ in die Matrix dispergiert wird.

17. Verwendung der heterophasischen Polymerzusammenfassung nach irgendeinem der Ansprüche 1 bis 12 für die Herstellung von sterilisierbaren oder sterilisierten Filmen und/oder Containern.

## Revendications

1. Composition polymère hétérophasique comprenant
- une matrice d'un copolymère du propylène, le copolymère du propylène comprenant des motifs comonomères dérivant de l'éthylène et d'une alpha-oléfine en C4 à C12, au moins 80 % en poids de la matrice étant constitués du copolymère du propylène,
- un copolymère élastomère éthylène/propylène/alpha-oléfine en C4 à C 12, qui est dispersé au sein de la matrice,
la composition polymère hétérophasique ayant une fraction soluble dans le xylène à froid, mesurée à 23°C selon ISO 6427, d'au moins 10 % en poids à 50 % en poids, et la fraction soluble dans le xylène à froid ayant une quantité de motifs dérivés du propylène d'au moins 60 % en poids, la quantité des motifs monomères dérivés d'une alpha-oléfine en C4 à C12 dans le copolymère du propylène de la matrice, et la quantité des motifs monomères dérivés d'une alpha-oléfine en C4 à C12 dans la fraction soluble dans le xylène à froid, différant de moins de 3,0 % en poids.

2. Composition polymère hétérophasique selon la revendication 1, dans laquelle le copolymère du propylène se trouvant dans la matrice contient une quantité de motifs comonomères dérivés de l'éthylène comprise dans la plage de 0,2 % en poids à 2,5 % en poids et une quantité de motifs comonomères dérivés d'une alpha-oléfine en C4 à C12 comprise dans la plage de 0,5 % en poids à 9,0 % en poids.

3. Composition polymère hétérophasique selon la revendication 1 ou 2, dans laquelle l'alpha-oléfine en C4 à C12 du copolymère du propylène de la matrice est le 1-butène, le 1-hexène, le 1-octène ou un mélange quelconque de ceux-ci.

4. Composition polymère hétérophasique selon la revendication 3, dans laquelle le copolymère du propylène de la matrice est un terpolymère propylène/éthylène/1-butène.

5. Composition polymère hétérophasique selon l'une des revendications précédentes, dans laquelle la matrice d'un copolymère du propylène a un indice MFR (2,16 kg, 230°C) compris dans la plage de 0,5 g/10 min à 2,5 g/10 min.

6. Composition polymère hétérophasique selon l'une des revendications précédentes, dans laquelle l'alpha-oléfine en C4 à C12 du copolymère élastomère est le 1-butène, le 1-hexène, le 1-octène ou un mélange quelconque de ceux-ci.

7. Composition polymère hétérophasique selon la revendication 6, dans laquelle le copolymère élastomère est un terpolymère élastomère éthylène/propylène/ 1-butène.

8. Composition polymère hétérophasique selon l'une des revendications précédentes, dans laquelle le copolymère élastomère est présent en une quantité de 10 % en poids à 30 % en poids par rapport au poids de la composition polymère hétérophasique.

9. Composition polymère hétérophasique selon l'une des revendications précédentes, dans laquelle le copolymère élastomère représente au moins 70 % en poids, plus particulièrement au moins 80 % en poids, d'une manière encore plus préférée au moins 90 % en poids de la fraction soluble dans le xylène à froid de la composition polymère hétérophasique.

10. Composition polymère hétérophasique selon l'une des revendications précédentes, qui a une fraction soluble dans le xylène à froid comprise dans la plage de 12,5 % en poids à 50 % en poids.

11. Composition polymère hétérophasique selon l'une des revendications précédentes, dans laquelle la fraction soluble dans le xylène à froid contient une quantité de motifs monomères dérivés du propylène comprise dans la plage de 65 % en poids à 90 % en poids.

12. Composition polymère hétérophasique selon l'une des revendications précédentes, dans laquelle la fraction soluble dans le xylène à froid à une viscosité intrinsèque d'au moins 1,5 dl/g, déterminée selon ISO 1628-1 à 135°C dans la décaline.

13. Film comprenant la composition polymère hétérophasique telle que définie dans l'une des revendications 1 à 12.

14. Récipient comprenant le film tel que défini dans la revendication 13 et/ou la composition polymère hétérophasique telle que définie dans l'une des revendications 1 à 12.

15. Procédé de préparation d'une composition polymère hétérophasique selon l'une des revendications 1 à 12, comprenant les étapes suivantes :
- préparation du copolymère du propylène constituant la matrice,
- préparation du copolymère élastomère et dispersion du copolymère élastomère dans la matrice du copolymère du propylène.

16. Procédé selon la revendication 15, dans lequel le copolymère élastomère est préparé en présence du copolymère du propylène constituant la matrice, et est dispersé *in situ* dans la matrice.

17. Utilisation de la composition polymère hétérophasique selon l'une des revendications 1 à 12 pour la préparation de films et/ou de récipients stérilisables ou stérilisés.
